# EUROPEAN PATENT SPECIFICATION

(11) **EP 4 119 784 B1**
(45) Date of publication and mention of the grant of the patent: **06.05.2026**
(21) Application number: 20924126.4
(22) Date of filing: 11.03.2020
(51) Int. Cl.: F02D 45/00, F02D 29/02, F02D 41/26, F02N 11/04, F02D 41/00, F02N 11/08, F02N 19/00, F02B 61/02

(54) **METHOD FOR CONTROLLING ENGINE CONTROL DEVICE AND SADDLE TYPE VEHICLE**
VERFAHREN ZUR STEUERUNG EINER MOTORSTEUERUNGSVORRICHTUNG UND SATTELFAHRZEUG
PROCÉDÉ DE COMMANDE DE DISPOSITIF DE COMMANDE DE MOTEUR ET VÉHICULE DE TYPE À SELLE

(43) Date of publication of application: 18.01.2023
(73) Proprietor: HONDA MOTOR CO., LTD., Tokyo 105-8404 (JP)
(72) Inventor: NIWA Junya, Tokyo 107-8556 (JP); OSAWA Toshifumi, Tokyo 107-8556 (JP)
(74) Representative: Dehns
(86) International application number: PCT/JP2020/010593
(87) International publication number: WO 2021/181572

(56) References cited:
- JP-A- 2004 190 662
- JP-A- 2005 248 921
- JP-A- 2007 292 009
- JP-A- 2007 292 009
- JP-A- 2013 104 358
- JP-A- 2013 181 418
- JP-A- 2013 181 418
- JP-A- 2014 105 625
- JP-A- 2015 140 722
- JP-A- 2019 152 146
- US-A1- 2006 190 161

## Description

### Technical Field

The present invention relates to a method for controlling an engine control device, and more particularly to a method for controlling an engine control device for controlling various devices necessary for driving an engine and a saddle type vehicle.

### Background Art

Conventionally, there is known an engine control device for controlling various devices necessary for driving an engine.

JP 2005 -248921 A discloses an engine control device that controls a fuel injection device, an ACG starter motor, and the like based on output signals of sensors such as a vehicle speed sensor, switches such as a starter switch, etc.

### Summary of Invention

### Problem to be solved by Invention

Here, since the engine control device as disclosed in JP 2005 -248921 A controls both the ACG starter motor and the fuel injection device, the engine control device tends to increase in size. Therefore, it is conceivable to divide into a first control device (ACG-ECU) that mainly controls the ACG starter motor and a second control device (FI-ECU) that mainly controls the fuel injection device. At this time, the rotation state of the ACG starter motor also needs to be transmitted to the second control device, but for example, in a configuration in which a harness that transmits a signal of a crank angle sensor that detects the rotation state of the ACG starter motor is connected to both the first control device and the second control device, a problem that the structure becomes complicated and the production cost increases arises.
Further relevant prior art is known from JP 2013 181418 A. This document discloses an engine control device comprising a first and a second control device with the aim of avoiding complexity.

An object of the present invention is to solve the problems of the prior art described above and to provide a method for controlling an engine control device and a saddle type vehicle capable of efficiently transmitting a rotation state of an ACG starter motor to an engine control device divided into two.

### Solution to Problem

In order to achieve the above object, the present invention provides a method for controlling an engine control device comprising the features of claim 1. Advantageous embodiments are the subject matter of the dependent claims.

According to a first preferred embodiment, the second control device does not execute control of the fuel injection device when the signal transmitted from the first control device is a flat signal without the pulse.

According to a second preferred embodiment, the first control device (70) generates a single second pulse (S) having a short pulse width and a short period based on the U-phase, V-phase, and W-phase pulses output from the crank angle sensor (40), and the second control device (80) receives the second pulse (S) from the first control device (70).

According to a third preferred embodiment, the first control device (70) generates the second pulse (S) by extracting and combining respective rising portions (A) of the U-phase, V-phase, and W-phase pulses output from the crank angle sensor (40).

According to a fourth preferred embodiment, the first control device (70) generates a single second pulse (S) having a short pulse width and a short period based on the U-phase, V-phase, and W-phase pulses output from the crank angle sensor (40), and timing of output of the second pulse (S) is corrected by a pulse output from the crank angle sensor (40).

Further, the present invention can advantageously be used in connection with a saddle type vehicle.

### Advantageous Effects of Invention

According to the invention, a method for controlling an engine control device applied to an engine control device (100) including a first control device (70) that controls an ACG starter motor (50) directly connected to a crank shaft (C) of an engine (E), and a second control device (80) that controls a fuel injection device (90), wherein the first control device (70) is connected to a crank angle sensor (40) that detects a rotation state of the ACG starter motor (50), and the second control device (80) receives an output signal of the crank angle sensor (40) from the first control device (70). Thus, a harness for transmitting the sensor signal of the crank angle sensor does not need to be connected to the second control device, the number of parts can be reduced and the structure can be simplified.

According to the invention, the first control device (70) transmits the output signal of the crank angle sensor (40) to the second control device (80) by a pulse signal at the time of normal rotation of the ACG starter motor (50), and converts the output signal of the crank angle sensor (40) into a flat signal without a pulse and transmits the flat signal to the second control device (80) at the time of reverse rotation of the ACG starter motor (50), and thus the control of the ACG starter motor includes a swing-back control in which the crank shaft is reverse rotated slightly at the time of engine start to lengthen the warm-up period, and the like but prohibiting the fuel injection control at the time of such reverse rotation drive can be realized by a simple configuration.

According to the first preferred embodiment , the second control device (80) does not execute control of the fuel injection device (90) when the signal transmitted from the first control device (70) is a flat signal without the pulse, and thus the fuel injection control at the time of reverse rotation can be prohibited by a simple configuration.

According to the second preferred embodiment , the first control device (70) generates a single second pulse (S) having a short pulse width and a short period based on the U-phase, V-phase, and W-phase pulses output from the crank angle sensor (40), and the second control device (80) receives the second pulse (S) from the first control device (70), whereby signal processing by the second control device is facilitated as the number of pulse signals received by the second control device signal is one.

According to the third preferred embodiment , the first control device (70) generates the second pulse (S) by extracting and combining respective rising portions (A) of the U-phase, V-phase, and W-phase pulses output from the crank angle sensor (40), and thus the single pulse signal having a short pulse width and a short period can be easily generated.

According to the fourth preferred embodiment , the first control device (70) generates a single second pulse (S) having a short pulse width and a short period based on the U-phase, V-phase, and W-phase pulses output from the crank angle sensor (40), and timing of output of the second pulse (S) is corrected by a pulse output from the crank angle sensor (40), and thus delay that occurs when the second pulse (S) is generated can be resolved.

It is also disclosed that the control of the ACG starter motor includes swing-back control for reverse rotating slightly the crank shaft at the time of engine start to lengthen the warm-up period, and the like but it becomes possible to realize prohibition of the fuel injection control at the time of such reverse rotation drive by a simple configuration in the saddle type vehicle.

### Brief Description of Drawings

Fig. 1 is a left side view of a motorcycle as a saddle type vehicle according to one embodiment of the present invention.
Fig. 2 is a block diagram illustrating an overall configuration of an engine control device according to a first embodiment.
Fig. 3 is a time chart illustrating a method for generating a second pulse.
Fig. 4 is a block diagram illustrating an overall configuration of an engine control device according to a second embodiment.
Fig. 5 is a block diagram illustrating an overall configuration of an engine control device according to a third embodiment.
Fig. 6 is a time chart illustrating a method for generating a second pulse according to the second embodiment and the third embodiment.

### Description of Embodiments

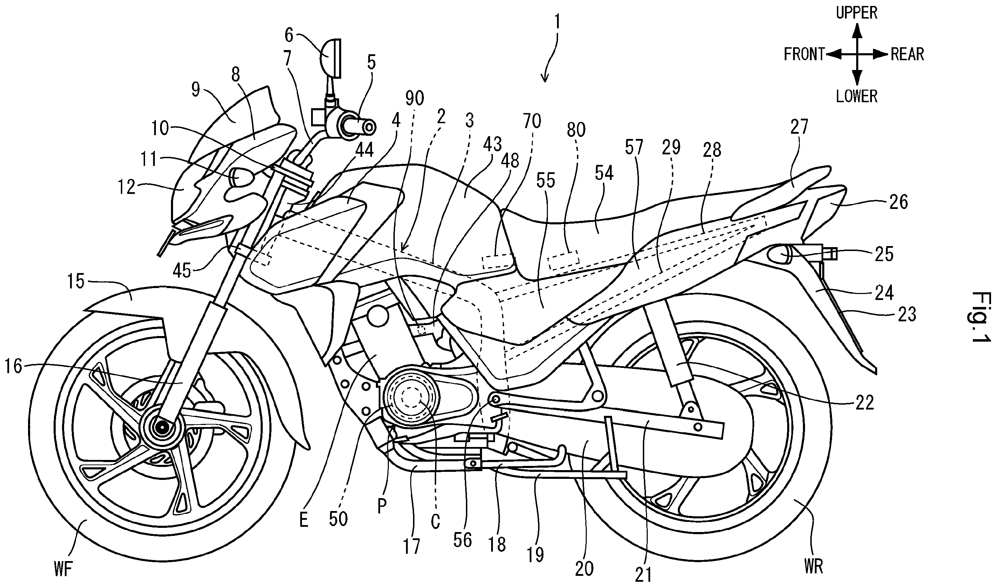

Hereinafter, preferred embodiments of the present invention are explained in detail with reference to the drawings. Fig. 1 is a left side view of a motorcycle 1 as a saddle type vehicle according to one embodiment of the present invention. A vehicle body frame 2 of the motorcycle 1 has a main frame 3 at a middle in a vehicle width direction that extends from a head pipe 44 toward a rear side of a vehicle body and curves downward. A pivot 56 that axially supports a swing arm 21 to be swingable is provided at a lower end portion of the main frame 3.

A steering stem (not shown) is axially supported by the head pipe 44 to be rotatable, and a top bridge 10 and a bottom bridge 45 that support a pair of left and right front forks 16 are fixed to the upper and lower sides of the steering stem. A steering handle 5 having a symmetrical handlebar 7 is fixed to the top bridge 10, and a pair of left and right rearview mirrors 6 are mounted to the steering handle 5. A front wheel WF is axially supported at the lower end portion of the front fork 16 to be rotatable, and a front fender 15 that covers the upper side of the front wheel WF is arranged at an intermediate position of the front fork 16.

A pair of left and right upper seat frames 28 and lower seat frames 29 are mounted to the upper part on the rear side of the main frame 3. A power unit P in which a single cylinder four-cycle engine E and a transmission are integrally configured is mounted at the lower part of the main frame 3. The swing arm 21 axially supported by the pivot 56 to be swingable is suspended from the lower seat frame 29 by a pair of left and right rear cushions 22. An ACG starter motor 50 functioning as a generator and a motor is fixed to the crank shaft C of the engine E.

The rotational driving force of the power unit P is transmitted to a rear wheel WR through a drive chain (not shown) covered by a chain cover 20. A throttle body 48 including a throttle valve and a fuel injection device 90 is attached to the rear surface side of the power unit P, and the combustion gas of the power unit P is guided to a muffler on the rear side of the vehicle body through an exhaust pipe 17. A side stand 18 and a center stand 19 are axially supported at the lower end portion of the main frame 3 to be swingable.

A front cowl 8 that supports a windproof screen 9 and a headlight 12 is attached to the front side of the head pipe 44. A pair of left and right front flasher lamps 11 are disposed on the outer side in the vehicle width direction of the front cowl 8.

A fuel tank 43 is disposed on an upper part of the main frame 3. A pair of left and right side shrouds 4 are attached to a position near the front and front of the fuel tank 43, and a seat 54 integrally formed with a front seat and a rear seat is disposed on the rear side of the fuel tank 43. A pair of left and right side covers 55 that cover both sides in the vehicle width direction of an air cleaner box (not illustrated) connected to the rear side of the throttle body 48 are disposed on the lower side of the fuel tank 43. A rear cowl 57 that covers the upper seat frame 28 and the lower seat frame 29 is disposed on the rear side of the side cover 55.

A grab bar 27 is disposed on an upper part of the rear side of the rear cowl 57, and a taillight 26 is attached to a rear end portion of the rear cowl 57. A rear fender 24 that supports a pair of left and right rear side flasher lamps 25 and rear side license plate 23 is disposed on the lower part of the rear cowl 57.

The engine control device according to the present embodiment includes a first control device 70 disposed on the lower part of the fuel tank 43 and a second control device 80 located on the rear side of the first control device 70. The first control device 70 mainly controls the ACG starter motor 50, and the second control device 80 mainly controls the fuel injection device 90.

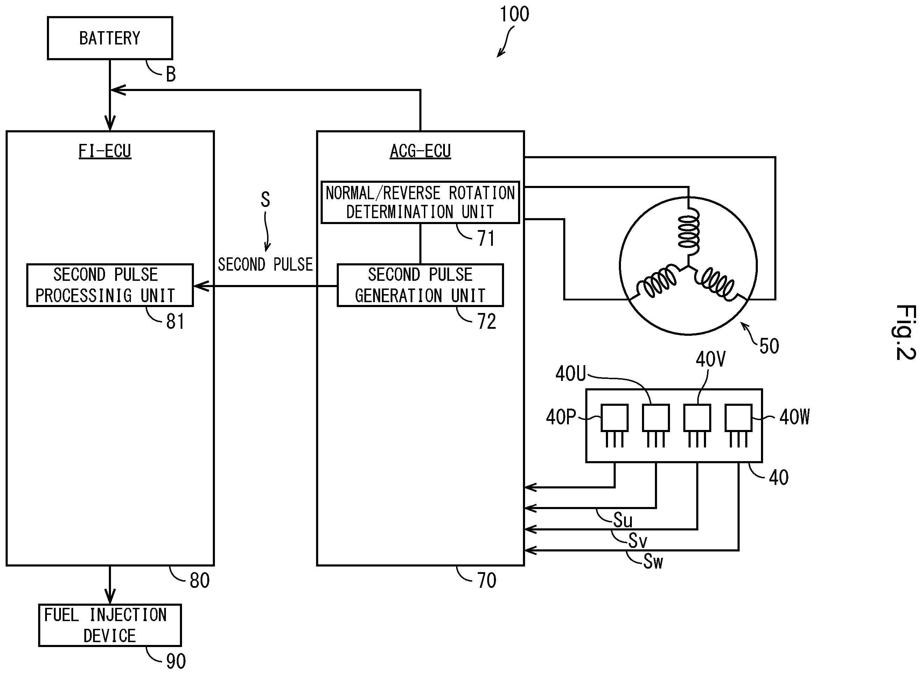

Fig. 2 is a block diagram illustrating an overall configuration of an engine control device 100 according to a first embodiment. As described above, the engine control device 100 mainly includes the first control device 70 serving as the ACG-ECU that controls the ACG starter motor 50, and the second control device 80 serving as the FI-ECU that mainly controls the fuel injection device 90.

A rotor position, that is, a crank angle of the ACG starter motor 50 is detected by a U-phase sensor 40U, a V-phase sensor 40V, and a W-phase sensor 40W mounted on a crank angle sensor 40. The crank angle sensor 40 is also provided with a PCB sensor 40P for detecting a compression top dead center and an exhaust top dead center. An output signal of the crank angle sensor 40 is transmitted to the first control device 70.

The first control device 70 includes a normal/reverse rotation determination unit 71 that determines in which state, normal rotation or reverse rotation, the ACG starter motor 50 is in, and a second pulse generation unit 72 that generates a single second pulse S based on output signals of the crank angle sensor 40, the U-phase sensor 40U, the V-phase sensor 40V, and the W-phase sensor 40W. The generated power of the ACG starter motor 50 is returned to the battery B via the first control device 70.

The first control device 70 determines the rotation state of the ACG starter motor 50 by the normal/reverse rotation determination unit 71, generates the second pulse S by the second pulse generation unit 72 in the case of the normal rotation, and transmits the second pulse S to the second control device 80. On the other hand, in the case of the reverse rotation, a flat signal without a pulse is generated by the second pulse generation unit 72 and transmitted to the second control device 80.

The second control device 80 includes a second pulse processing unit 81 that processes the second pulse S. The second pulse processing unit 81 controls the fuel injection device 90 based on the second pulse S. When the flat signal without a pulse is transmitted from the second pulse generation unit 72, the ACG starter motor 50 is configured so as not to drive the fuel injection device 90 assuming reverse rotation drive is performed by the swing-back control that reverse rotates the crank shaft C and the like to lengthen the warm-up period to go beyond the compression top dead center at the time of engine start.

As described above, according to the engine control device 100 of the present embodiment, since the first control device 70 is connected to the crank angle sensor 40 that detects the rotation state of the ACG starter motor 50, and the second control device 80 is configured to receive the output signal of the crank angle sensor 40 from the first control device 70, the harness that transmits the sensor signal of the crank angle sensor 40 does not need to be connected to the second control device 80, the number of parts can be reduced and the structure can be simplified. The first control device 70 transmits the output signal of the crank angle sensor 40 to the second control device 80 by a pulse signal at the time of normal rotation of the ACG starter motor 50 and converts the output signal of the crank angle sensor 40 into a flat signal without a pulse and transmits the flat signal to the second control device 80 at the time of reverse rotation of the ACG starter motor 50, so that prohibiting the fuel injection control at the time of reverse rotation drive such as swing-back control can be realized by a simple configuration.

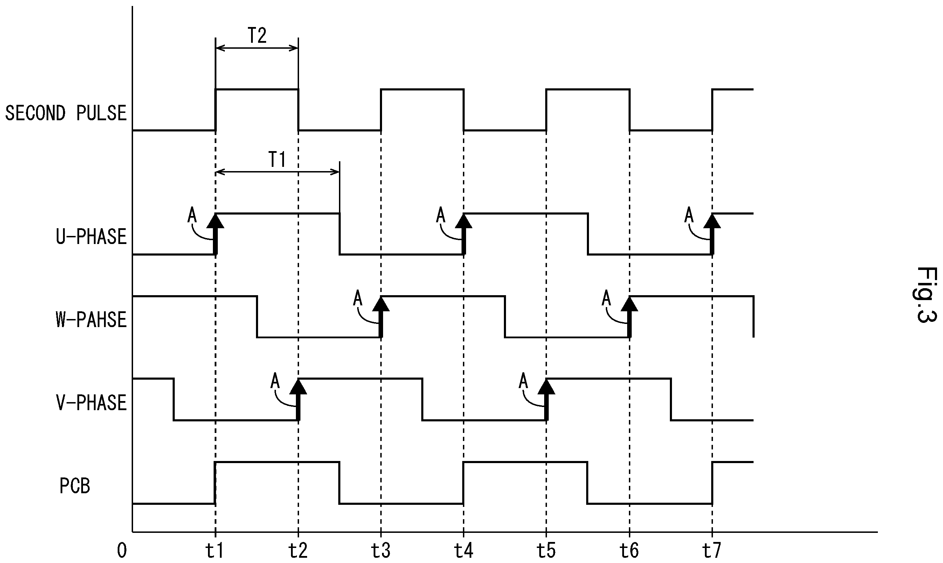

Fig. 3 is a time chart illustrating a method for generating the second pulse S according to the first embodiment. As described above, the first control device 70 generates the second pulse S to be transmitted to the second control device 80 based on the output signal of the crank angle sensor 40.

The crank angle sensor 40 according to the present embodiment outputs three pulse signals obtained by shifting a pulse having a pulse width of 30 degrees and a cycle of 60 degrees by 10 degrees from each other in the U-phase, the V-phase, and the W-phase. The second pulse generation unit 72 extracts the rising portion A of the respective pulse signals such as the rising portion A of the U-phase at time t1, the rising portion A of the V-phase at time t2, the rising portion A of the W-phase at time t3, and generates the second pulse S having a pulse width of 20 degrees and a cycle of 40 degrees. As a result, the fuel injection device 90 can be controlled based on the second pulse S having the pulse width T2 shorter than the pulse width T1 of the original pulse signal of the crank angle sensor 40, and the fuel injection device 90 can be controlled with higher accuracy.

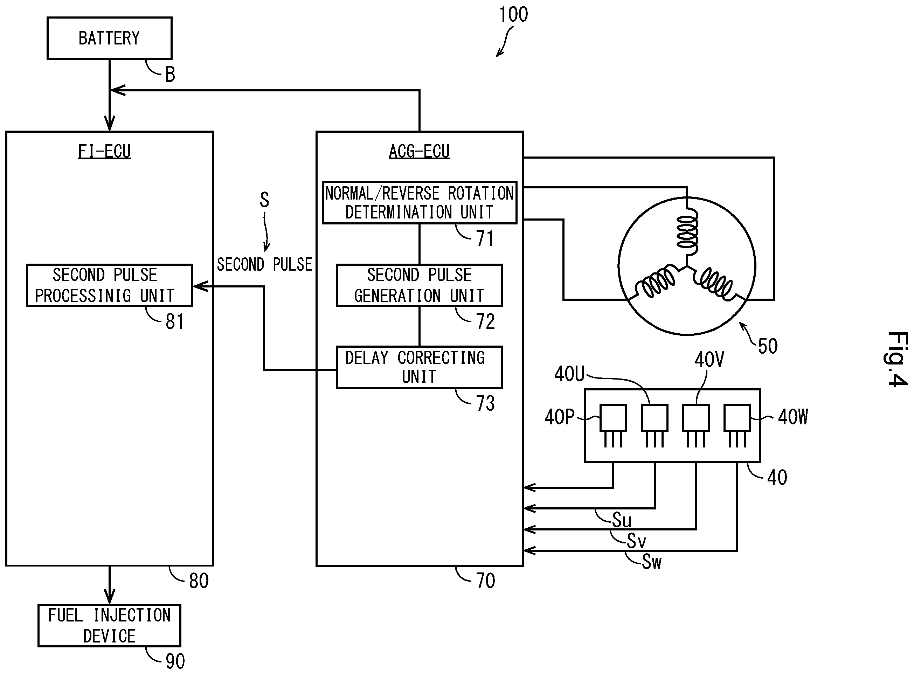

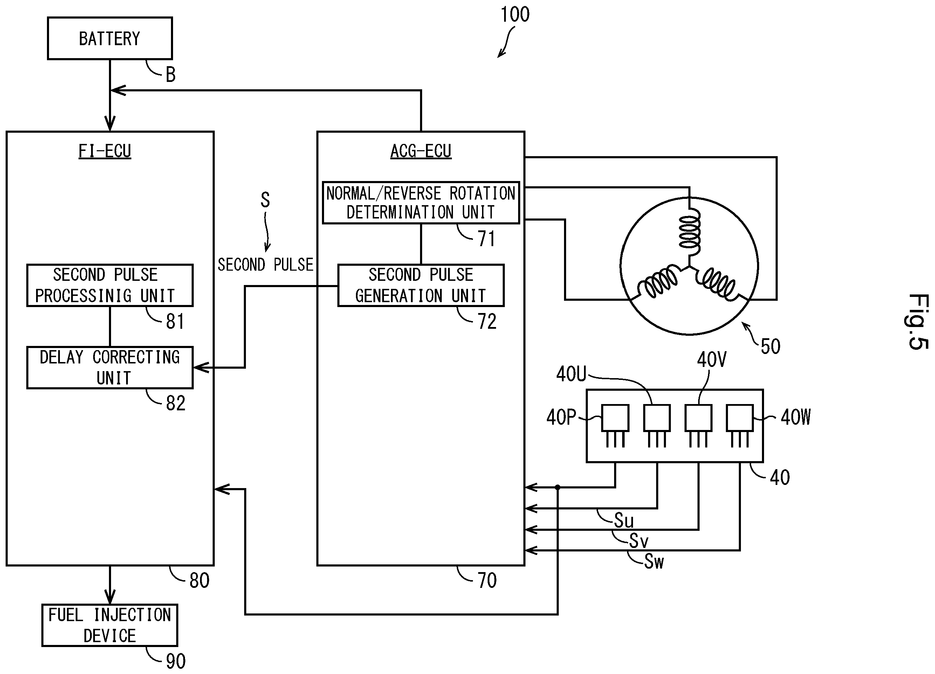

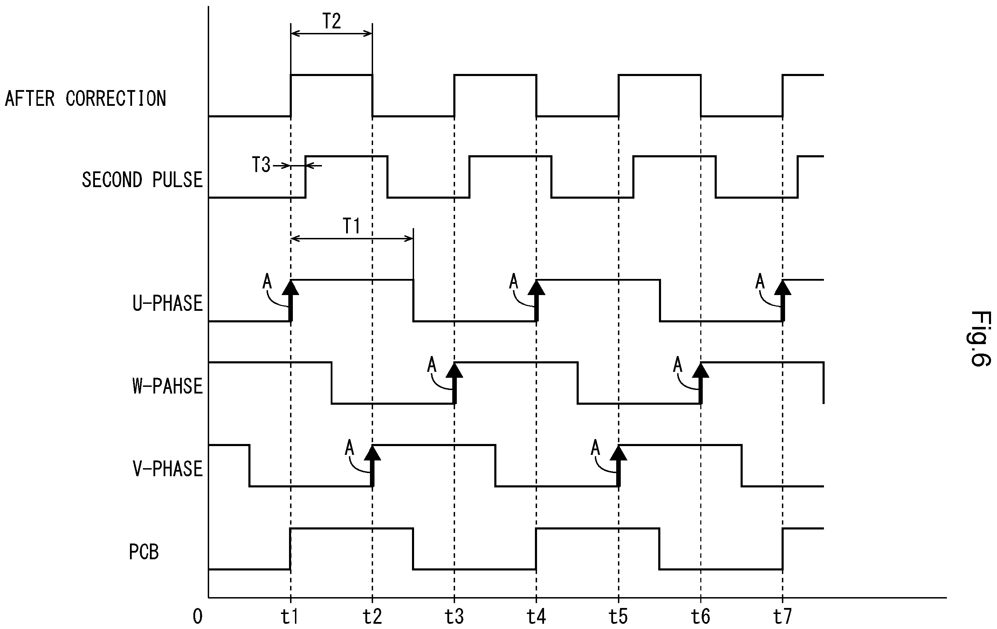

Fig. 4 is a block diagram illustrating an overall configuration of an engine control device according to a second embodiment. Fig. 5 is a block diagram illustrating an overall configuration of an engine control device according to a third embodiment, and Fig. 6 is a time chart illustrating a method of generating a second pulse according to the second embodiment and the third embodiment.

Since a delay T3 (see Fig. 6) occurs when the second pulse is actually generated in the first control device 70, the delay correction is performed using the PCB signal in the present embodiment. Since the PCB signal moves in the same manner as the U-phase except for the missing tooth portion, the delay of the second pulse S can be eliminated by matching the rising timing of the PCB signal with the second pulse S.

In the second embodiment, a delay correcting unit 73 is provided in the first control device 70, so that the second pulse S after the delay correction is performed is transmitted to the second control device 80. In the third embodiment, on the other hand, a delay correcting unit 82 is provided in the second control device 80, so that the second pulse S transmitted from the second pulse generation unit 72 is corrected by the second control device 80. In the third embodiment, since the delay correction is performed in the second control device 80, the PCB signal is also input to the second control device 80.

Note that the form of the motorcycle, the shapes and structures of the first control device and the second control device, the arrangement positions on the vehicle body, the structure and output signal of the crank angle sensor, the form of the second pulse generated by the second pulse generation unit, and the like are not limited to the above embodiments, and various changes can be made. The engine control device according to the present invention can be applied not only to a motorcycle but also to various vehicles equipped with an engine to which an ACG starter motor and a fuel injection device are applied.

### Reference Signs List

- 1: Motorcycle
- 40: Crank angle sensor
- 50: ACG starter motor
- 70: First control device (ACG-ECU)
- 80: Second control device (FI-ECU)
- 90: Fuel injection device
- 100: Engine control device
- A: Rising portion
- S: Second pulse
- E: Engine
- C: Crank shaft

## Claims

1. A method for controlling an engine control device applied to an engine control device (100) including a first control device (70) that controls an ACG starter motor (50) directly connected to a crank shaft (C) of an engine (E), and a second control device (80) that controls a fuel injection device (90), wherein
the first control device (70) is connected to a crank angle sensor (40) that detects a rotation state of the ACG starter motor (50); and
the second control device (80) receives an output signal of the crank angle sensor (40) from the first control device (70) and,
the first control device (70) transmits the output signal of the crank angle sensor (40) to the second control device (80) by a pulse signal at the time of normal rotation of the ACG starter motor (50), and converts the output signal of the crank angle sensor (40) into a flat signal without a pulse and transmits the flat signal to the second control device (80) at the time of reverse rotation of the ACG starter motor (50).

2. The method for controlling the engine control device according to claim 1, wherein the second control device (80) does not execute control of the fuel injection device (90) when the signal transmitted from the first control device (70) is a flat signal without the pulse.

3. The method for controlling the engine control device according to claim 1 or 2, wherein the first control device (70) generates a single second pulse (S) having a short pulse width and a short period based on U-phase, V-phase, and W-phase pulses output from the crank angle sensor (40); and
the second control device (80) receives the second pulse (S) from the first control device (70).

4. The method for controlling the engine control device according to claim 3, wherein the first control device (70) generates the second pulse (S) by extracting and combining respective rising portions (A) of the U-phase, V-phase, and W-phase pulses output from the crank angle sensor (40).

5. The method for controlling the engine control device according to claim 1, wherein the first control device (70) generates a single second pulse (S) having a short pulse width and a short period based on U-phase, V-phase, and W-phase pulses output from the crank angle sensor (40); and
timing of output of the second pulse (S) is corrected by a pulse output from the crank angle sensor (40).

## Patentansprüche

1. Verfahren zur Steuerung einer Motorsteuervorrichtung, das auf eine Motorsteuervorrichtung (100) angewendet wird, die eine erste Steuervorrichtung (70), die einen direkt mit einer Kurbelwelle (C) eines Motors (E) verbundenen ACG-Anlasser (50) steuert, und eine zweite Steuervorrichtung (80) umfasst, die eine Kraftstoffeinspritzvorrichtung (90) steuert, wobei
die erste Steuervorrichtung (70) mit einem Kurbelwinkelsensor (40) verbunden ist, der einen Drehzustand des ACG-Anlasser-Motors (50) erfasst; und
die zweite Steuervorrichtung (80) ein Ausgangssignal des Kurbelwinkelsensors (40) von der ersten Steuervorrichtung (70) empfängt und
die erste Steuervorrichtung (70) das Ausgangssignal des Kurbelwinkelsensors (40) zum Zeitpunkt der normalen Drehung des ACG-Anlasser-Motors (50) mittels eines Impulssignals an die zweite Steuervorrichtung (80) überträgt, und das Ausgangssignal des Kurbelwinkelsensors (40) in ein flaches Signal ohne Puls bzw. Impuls umwandelt und das flache Signal an die zweite Steuervorrichtung (80) zum Zeitpunkt der Rückwärtsdrehung des ACG-Anlasser-Motors (50) überträgt.

2. Verfahren zur Steuerung der Motorsteuervorrichtung nach Anspruch 1, wobei die zweite Steuervorrichtung (80) keine Steuerung der Kraftstoffeinspritzvorrichtung (90) ausführt, wenn das von der ersten Steuervorrichtung (70) übertragene Signal ein flaches Signal ohne den Impuls ist.

3. Verfahren zur Steuerung der Motorsteuervorrichtung nach Anspruch 1 oder 2, wobei die erste Steuervorrichtung (70) einen einzelnen zweiten Impuls (S) mit kurzer Impulsbreite und kurzer Periode auf der Grundlage von U-Phasen-, V-Phasen- und W-Phasen-Impulsen erzeugt, die vom Kurbelwinkelsensor (40) ausgegeben werden; und
die zweite Steuervorrichtung (80) den zweiten Impuls (S) von der ersten Steuervorrichtung (70) empfängt.

4. Verfahren zur Steuerung der Motorsteuervorrichtung nach Anspruch 3, wobei die erste Steuervorrichtung (70) den zweiten Impuls (S) erzeugt, indem sie die jeweiligen ansteigenden Abschnitte (A) der vom Kurbelwinkelsensor (40) ausgegebenen U-Phasen-, V-Phasen- und W-Phasen-Impulse extrahiert und kombiniert.

5. Verfahren zur Steuerung der Motorsteuervorrichtung nach Anspruch 1, wobei die erste Steuervorrichtung (70) einen einzelnen zweiten Impuls (S) mit kurzer Impulsbreite und kurzer Periode auf der Grundlage von U-Phasen-, V-Phasen- und W-Phasen-Impulsen erzeugt, die vom Kurbelwinkelsensor (40) ausgegeben werden; und
der Zeitpunkt der Ausgabe des zweiten Impulses (S) durch einen vom Kurbelwinkelsensor (40) ausgegebenen Impuls korrigiert wird.

## Revendications

1. Procédé de commande d'un dispositif de commande de moteur appliqué à un dispositif de commande de moteur (100) comprenant un premier dispositif de commande (70) qui commande un démarreur ACG (50) directement relié à un vilebrequin (C) d'un moteur (E), et un deuxième dispositif de commande (80) qui commande un dispositif d'injection de carburant (90), dans lequel
le premier dispositif de commande (70) est relié à un capteur d'angle de vilebrequin (40) qui détecte l'état de rotation du moteur de démarrage ACG (50) ; et
le deuxième dispositif de commande (80) reçoit un signal de sortie du capteur d'angle de vilebrequin (40) provenant du premier dispositif de commande (70) et,
le premier dispositif de commande (70) transmet le signal de sortie du capteur d'angle de vilebrequin (40) au deuxième dispositif de commande (80) sous forme d'un signal impulsionnel lors de la rotation normale du démarreur ACG (50), et convertit le signal de sortie du capteur d'angle de vilebrequin (40) en un signal continu sans impulsion et transmet le signal continu au deuxième dispositif de commande (80) lors de la rotation inverse du démarreur ACG (50).

2. Procédé de commande du dispositif de commande du moteur selon la revendication 1, dans lequel le deuxième dispositif de commande (80) n'effectue pas de commande du dispositif d'injection de carburant (90) lorsque le signal transmis par le premier dispositif de commande (70) est un signal continu sans impulsion.

3. Procédé de commande du dispositif de commande du moteur selon la revendication 1 ou 2, dans lequel le premier dispositif de commande (70) génère une seule deuxième impulsion (S) ayant une largeur d'impulsion courte et une période courte sur la base des impulsions de phase U, de phase V et de phase W émises par le capteur d'angle de vilebrequin (40) ; et
le deuxième dispositif de commande (80) reçoit la deuxième impulsion (S) provenant du premier dispositif de commande (70).

4. Procédé de commande du dispositif de commande du moteur selon la revendication 3, dans lequel le premier dispositif de commande (70) génère la deuxième impulsion (S) en extrayant et en combinant les parties montantes respectives (A) d' s impulsions de phase U, de phase V et de phase W émises par le capteur d'angle de vilebrequin (40).

5. Procédé de commande du dispositif de commande du moteur selon la revendication 1, dans lequel le premier dispositif de commande (70) génère une seule deuxième impulsion (S) ayant une largeur d'impulsion courte et une période courte sur la base des impulsions de phase U, de phase V et de phase W émises par le capteur d'angle de vilebrequin (40) ; et
le calage de la sortie de la deuxième impulsion (S) est corrigé par une impulsion émise par le capteur d'angle de vilebrequin (40).
